(19) Europäisches Patentamt
European Patent Office
Office européen des brevets

(11) **EP 1 600 667 B1**

(12) **EUROPÄISCHE PATENTSCHRIFT**

(45) Veröffentlichungstag und Bekanntmachung des Hinweises auf die Patenterteilung:
**21.02.2007 Patentblatt 2007/08**

(51) Int Cl.:
*F16H 55/14* *(2006.01)*    *F16H 57/00* *(2006.01)*

(21) Anmeldenummer: **04102288.0**

(22) Anmeldetag: **25.05.2004**

(54) **Zahnrad und Verfahren zur Beeinflussung des Schwingungsverhaltens einer Brennkraftmaschine mittels eines Zahnrades**

Gear and Method to optimize the vibratory behaviour from a combustion engine using a gear

Roue dentée et Procédé d'optimisation du comportement vibratoire d'un moteur a combustion interne au moyen d'une roue dentée

(84) Benannte Vertragsstaaten:
**DE FR GB**

(43) Veröffentlichungstag der Anmeldung:
**30.11.2005 Patentblatt 2005/48**

(73) Patentinhaber: **Ford Global Technologies, LLC, A subsidary of Ford Motor Company Dearborn, MI 48126 (US)**

(72) Erfinder:
• **Figura, Michael Georg 41542, Dormagen (DE)**

• **Kluge, Dr. Torsten 51491, Overath (DE)**

(74) Vertreter: **Drömer, Hans-Carsten et al Ford-Werke Aktiengesellschaft, Patentabteilung NH/DRP, Henry-Ford-Strasse 1 50725 Köln (DE)**

(56) Entgegenhaltungen:
**DE-A- 4 441 538      US-A- 5 921 879 US-B1- 6 282 502**

## Beschreibung

Die Erfindung betrifft ein Zahnrad, insbesondere für die Verwendung in einem Steuertrieb einer Brennkraftmaschine, dessen äußere Gestalt d. h. Geometrie durch eine Vielzahl von charakteristischen konstruktiven Zahnradparametern $z_1$ bis $z_n$ bestimmt ist, wie beispielsweise dem Kopfkreisdurchmesser $d_k$ bzw. -radius $r_k$, dem Wälzkreisdurchmesser $d_w$ bzw. -radius $r_w$, dem Fußkreisdurchmesser $d_f$ bzw. -radius $r_f$, dem Teilkreisdurchmesser $d_t$ bzw. -radius $r_t$, der Zahnbreite b, der Teilung p, dem Modul m, der Zahndicke s, der Zahnlückenweite e, der Kopfhöhe $h_k$, der Zahnhöhe h, der Fußhöhe $h_f$ oder dergleichen.

Die US 5 921 879 zeigt ein Zahnrad gemäß dem Oberbegriff des Anspruchs 1.

Des Weiteren betrifft die Erfindung ein Verfahren zur Beeinflussung der Schwingungen und des Schwingungsverhaltens einer Brennkraftmaschine und ihrer Nebenaggregate unter Verwendung eines derartigen Zahnrades.

Zunächst soll auf die bereits oben genannten und aufgeführten Zahnradparameter eingegangen werden. Insbesondere soll ausgeführt werden, wie die einzelnen Begriffe im Rahmen der vorliegenden Erfindung definiert sind d.h. wie die verwendeten Begrifflichkeiten zu verstehen sind.

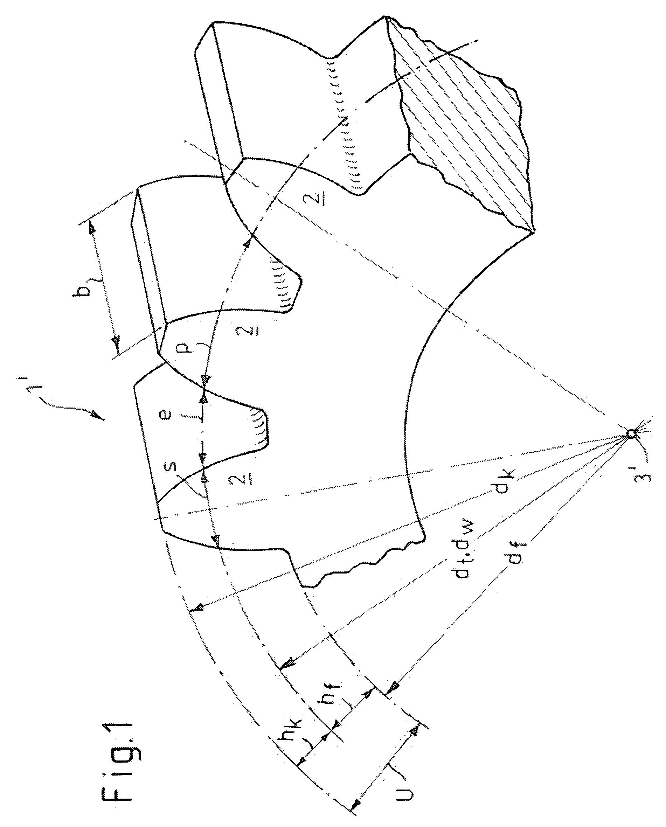

Hierzu ist in Figur 1 ein Zahnradsegment dargestellt, welches über eine Evolventenverzahnung verfügt. Das illustrierte Stirnrad ist ein sogenanntes Nullrad, bei dem das Werkzeug im Rahmen der Herstellung des Zahnrades auf dem Teilkreis abgerollt wird.

Der Wälzzylinder beschreibt die Bahn des Wälzpunktes, wobei der Wälzpunkt der Eingriffspunkt d.h. der Berührpunkt der beiden Zahnflanken zweier in Eingriff befindlicher Zahnräder ist. Bei einem sogenannten Nullrad bildet der Wälzzylinder gleichzeitig die Bezugsfläche, auf die die übrigen Bestimmungsgrößen der Verzahnung bezogen werden. Der Wälzzylinder wird dann auch als Teilzylinder bzw.

Teilkreis bezeichnet. Der Grundkreis ist der Kreis, auf dem eine Gerade abrollen muß, damit ein auf dieser Geraden angeordneter Punkt P eine Evolvente beschreibt, welche die spätere Zahnflanke bildet.

Wie Figur 1 entnommen werden kann, definiert die Zahnbreite b den Abstand der beiden Stirnflächen des Zahnrades auf der Bezugsfläche. Aus dem Teilkreisumfang

$$U = d_t \cdot \pi = x \cdot p$$

läßt sich der Teilkreisdurchmesser $d_t$ berechnen:

$$d_t = x \cdot p / \pi = x \cdot m$$

Dabei steht x für die Zähnezahl des Zahnrades und p bezeichnet die Teilung. Das Modul m des Zahnrades ist eine teilungsabhängige Größe mit der Einheit *mm*, auf die alle übrigen Zahnradparameter bezogen werden können. Die beiden Parameter Zahndicke s und Zahnlückenweite e ergeben zusammen die Teilung p. Die übrigen Zahnradparameter können Figur 1 direkt entnommen werden und brauchen nicht näher erläutert werden.

Zahnräder der oben beschriebenen Art finden im Fahrzeugbau und hier insbesondere als Bestandteil der Brennkraftmaschine unterschiedlichste Verwendungen. Die Aufgabe der Zahnräder besteht dabei in der Regel in der Übertragung einer Leistung oder einer Drehbewegung, wobei das Drehmoment oder die Drehzahl gewandelt werden kann und/oder eine Änderung der Drehrichtung erzielt werden kann.

Ein Teil der in der Brennkraftmaschine durch die chemische Umsetzung des Kraftstoffes gewonnenen Leistung wird beispielsweise genutzt, um die für den Betrieb der Brennkraftmaschine und des Kraftfahrzeuges erforderlichen Nebenaggregate, insbesondere die Ölpumpe, die Kühlmittelpumpe, die Lichtmaschine und dergleichen anzutreiben, wozu unter anderem Zahnräder eingesetzt werden.

Für den Antrieb der Nebenaggregate werden dabei in der Regel Riemenantriebe oder Kettenantriebe verwendet, die neben einer Vielzahl von Zahnrädern auch einen Riemen oder eine Kette als Antriebsmittel aufweisen. Der Riemenantrieb bzw. Kettenantrieb soll dabei unter möglichst geringen Energieverlusten und mit möglichst wenig Wartungsaufwand durch Nachspannen ein großes Drehmoment von der Kurbelwelle auf die Nebenaggregate übertragen. Häufig wird dabei der Antrieb mehrerer Nebenaggregate in einem Riemen- bzw. Kettenantrieb zusammengefaßt.

Eine weitere Verwendung finden Zahnräder auch im Steuertrieb der Brennkraftmaschine, der auch als Nockenwellenantrieb bezeichnet wird. Die Nockenwelle, die der Steuerung des Ladungswechsels dient, wird dabei von der Kurbelwelle angetrieben.

Nach dem Stand der Technik werden für den Ladungswechsel in der Regel Hubventile verwendet, die entlang ihrer Längsachse zwischen einer Ventilschließstellung und einer Ventiloffenstellung bewegbar sind, um eine Einlaß- oder Auslaßöffnung einer Brennkammer der Brennkraftmaschine freizugeben bzw. zu versperren. Zur Betätigung des Ventils werden einerseits Ventilfedermitteln vorgesehen, um das Ventil in Richtung Ventilschließstellung vorzuspannen, und andererseits Ventilbetätigungseinrichtung eingesetzt, um das Ventil entgegen der Vorspannkraft der Ventilfedermittel zu öffnen.

Die Ventilbetätigungseinrichtung umfaßt eine Nockenwelle, auf der eine Vielzahl von Nocken angeordnet ist und die mittels eines Steuertriebes von der Kurbelwelle in der Art in Drehung versetzt wird, daß die Nockenwelle und mit dieser die Nocken mit der halben Kurbelwellendrehzahl umläuft bzw. umlaufen.

Grundsätzlich wird dabei zwischen einer untenliegenden Nockenwelle und einer obenliegenden Nockenwelle unterschieden.

Untenliegende Nockenwellen eignen sich für die Betätigung von sogenannten stehenden Ventilen, aber auch unter Zuhilfenahme von Stoßstangen und Hebeln, beispielsweise Schwinghebeln oder Kipphebeln, für die Betätigung hängender Ventile. Stehende Ventile werden geöffnet, indem sie nach oben verschoben werden, wohingegen hängende Ventil durch eine Abwärtsbewegung geöffnet werden. Dabei wird üblicherweise ein Stößel als Zwischenelement verwendet, der sich zumindest während des Offnungs- und Schließvorganges mit dem Nocken der Nockenwelle in Eingriff befindet. Bei unten liegenden Nockenwellen kann der Antrieb durch die Kurbelwelle ausschließlich mittels Zahnrädern erfolgen ohne daß eine Kette oder ein Riemen vorgesehen werden muß.

Obenliegende Nockenwellen werden für die Betätigung hängender Ventile verwendet, wobei ein Ventiltrieb mit obenliegender Nockenwelle als weiteres Ventiltriebsbauteil einen Schwinghebel, einen Kipphebel oder einen Stößel aufweist. Der Schwinghebel dreht dabei um einen festen Drehpunkt und verschiebt bei Auslenkung durch den Nocken das Ventil entgegen der Vorspannkraft der Ventilfedermittel in Richtung Ventiloffenstellung. Bei einem Kipphebel, der um einen mittig angeordneten Drehpunkt schwenkbar ist, greift der Nocken an dem einen Ende des Kipphebels ein, wobei das Ventil am gegenüberliegenden Ende des Hebels angeordnet ist. Bei oben liegenden Nockenwellen erfolgt der Antrieb durch die Kurbelwelle ebenfalls mittels Zahnrädern, wobei ein auf der Kurbelwelle angeordnetes Zahnrad und ein auf der Nockenwelle angeordnetes Zahnrad mittels einer Kette oder eines Riemen gekoppelt sind.

Bei Verwendung eines Stößels wird dieser Stößel auf das der Brennkammer abgewandte Ende des Hubventils aufgesetzt, so daß der Stößel an der oszillierenden Hubbewegung des Ventils teilnimmt, wenn der Nocken sich mit seiner Nockenmantelfläche im Bereich der Nockennase entlang einer Berührungslinie in Eingriff befindet mit dem Stößel.

Als problematisch bei der Auslegung von Steuertrieben bzw. Nockenwellenantrieben ist insbesondere anzusehen, daß es sich sowohl bei der antreibenden Kurbelwelle als auch bei der angetriebenen Nockenwelle um dynamische, schwingungsfähige Systeme handelt.

Die Kurbelwelle bildet zusammen mit den an ihr angekoppelten Triebwerksteilen ein schwingungsfähiges System. Dabei wird die Kurbelwelle durch die sich zeitlich verändernden Drehkräfte, welche über die an den einzelnen Kurbelzapfen angelenkten Pleuelstangen in die Kurbelwelle eingeleitet werden, zu Drehschwingungen angeregt. Bei Anregung der Kurbelwelle im Eigenfrequenzbereich kann es dabei zu hohen Drehschwingungsamplituden kommen, die sogar zum Dauerbruch führen können.

Der Drehkraftverlauf an einer Kurbelkröpfung einer Viertaktbrennkraftmaschine ist periodisch, wobei sich die Periode über zwei Umdrehungen der Kurbelwelle erstreckt. Üblicherweise wird der Drehkraftverlauf mittels Fourier-Analyse in seine harmonischen Anteile zerlegt, um Aussagen über die Erregung von Drehschwingungen treffen zu können. Dabei setzt sich der tatsächliche Drehkraftverlauf aus einer konstanten Drehkraft und einer Vielzahl von sich harmonisch verändernden Drehkräften zusammen, die unterschiedliche Drehkraftamplituden und Frequenzen bzw. Schwingzahlen aufweisen. Das Verhältnis der Schwingzahl $n_i$ jeder Harmonischen zur Drehzahl n der Kurbelwelle bzw. des Motors, wird als die Ordnung i der Harmonischen bezeichnet. Die Drehschwingungen der Kurbelwelle führen dabei zu mehr oder weniger großen Drehzahlschwankungen.

Die Drehschwingungen der Kurbelwelle werden ungewollt über den Steuertrieb bzw. Nockenwellenantrieb auf die Nockenwelle übertragen, wobei die Nockenwelle selbst auch ein schwingungsfähiges System darstellt. Umgekehrt beeinflussen die Drehschwingungen der Nockenwelle auch die Kurbelwelle bzw. die Kurbelwellendrehschwingung.

Es sind eine Vielzahl von Einflußfaktoren dafür verantwortlich, daß auch die Nockenwelle zu Drehschwingungen angeregt wird. So wird die umlaufende Nockenwelle mit einem Drehmoment entgegen ihrer Drehrichtung beaufschlagt, wenn der Nocken im Bereich seiner Nockennase auf den Stößel aufläuft und das Ventil entgegen der Vorspannkraft der Ventilfedermittel in Richtung Ventiloffenstellung bewegt, wohingegen beim Schließvorgang, wenn das Ventil mittels der Ventilfedermittel in Richtung Ventilschließstellung gedrückt wird, die Nockenwelle über den Nocken mit einem zusätzlichen Drehmoment in Richtung Nockenwellendrehung beaufschlagt wird. Handelt es sich bei der Brennkraftmaschine zudem um eine aufgeladene Brennkraftmaschine, sind diese durch den Offnungs- und Schließvorgang der Ventile generierten und auf die Nockenwelle über die Nocken wirkenden zusätzlichen Drehmomente besonders ausgeprägt, insbesondere im Vergleich zu einem herkömmlichen Saugmotor.

Zusätzliche dynamische Belastungen der Nockenwelle können sich dadurch ergeben, daß zur Ausbildung eines variablen Ventiltriebes sogenannte Nockenwellenversteller vorgesehen werden, die die Nockenwelle im Bezug auf die Kurbelwelle verdrehen, um auf diese Weise die Steuerzeiten zu variieren.

Des weiteren kann vorgesehen werden, daß mittels zusätzlicher Nocken auf der Nockenwelle die Kraftstoffeinspritzpumpe bzw. -pumpen betätigt wird bzw. werden, wobei über diese zusätzlichen Steuernocken weitere sich zeitlich verändernde Drehmomente in die Nockenwelle eingeleitet werden.

Die Drehschwingungen sowohl der Nockenwelle als auch der Kurbelwelle sind nicht nur im Hinblick auf die Bauteilfestigkeit und den Bauteilverschleiß als kritisch anzusehen. Insbesondere die durch die Kurbelwellendrehschwingungen hervorgerufenen Drehzahlschwankungen der Brennkraftmaschine und die Abweichung der tatsächlichen Steuerzeiten von den gewünschten Steuerzeiten infolge der Nockenwellendrehschwingung sind als nachteilig anzusehen.

In zunehmenden Maße werden die beschriebenen Effekte aber auch als nachteilig hinsichtlich ihrer ursächlichen Wirkung auf die Geräuschentwicklung der Brennkraftmaschine betrachtet.

Zum einen ist die zunehmende Geräuschemission ein immer ernster zu nehmendes Umweltproblem, das sie sich nicht nur grundsätzlich auf die Lebensqualität, sondern insbesondere auch auf die Gesundheit der dem zunehmenden Lärm ausgesetzten Menschen nachteilig auswirkt, weshalb eine Vielzahl von Vorschriften erlassen worden sind, in denen die einzuhaltenden Geräuschgrenzwerte festgelegt wurden. Die wichtigsten Vorschriften sind dabei das Bundesimmissionsschutzgesetz (BlmSchG) und die Richtlinien der Europäischen Kommission.

Konzentrierte sich anfangs die Entwicklung bei der Geräuschminderung auf den Motor als der dominierenden Geräuschquelle des Kraftfahrzeuges, sind die Konstrukteure mittlerweile gezwungen, sich mit sämtlichen Geräuschquellen, welche zu der Gesamtgeräuschemission beitragen, auseinander zu setzen, um den immer schärferen gesetzlichen Vorschriften hinsichtlich der zulässigen Geräuschemission eines Kraftfahrzeuges weiterhin gerecht zu werden,

Die Drehschwingungen der Kurbelwelle und der Nockenwelle führen dabei sowohl zu Geräuschen durch Körperschallabstrahlung als auch zu Geräuschen durch Körperschalleinleitung in die Karosserie und in die Brennkraftmaschine.

Aber nicht nur die Geräuschminderung steht bei der konstruktiven Auslegung der Brennkraftmaschine im Fokus der Konstrukteure. Zunehmend wird versucht, das von der Brennkraftmaschine verursachte Geräusch gezielt zu beeinflussen und zu modellieren. In diesem Zusammenhang wird auch von Geräuschdesign bzw. Sounddesign gesprochen. Motiviert werden diese Entwicklungsarbeiten durch die Erkenntnis, daß die Kaufentscheidung eines potentiellen Kunden beim Erwerb eines Fahrzeuges nicht unwesentlich vom Geräusch der Brennkraftmaschine bzw. des Fahrzeugs mitbeeinflußt wird. So bevorzugt der Fahrer eines Sportwagens ein Fahrzeug bzw. einen Motor, dessen Geräusch den sportlichen Charakter des Fahrzeuges unterstreicht.

Beim Sounddesign wird dabei unter anderem Einfluß genommen auf die Schwingungen der Brennkraftmaschine und ihrer Nebenaggregate, die letztendlich ursächlich verantwortlich sind für die emittierten Geräusche.

Vor diesem Hintergrund ist es die Aufgabe der vorliegenden Erfindung, ein Zahnrad der gattungsbildenden Art bereitzustellen, mit dem auf die Schwingungen und das Schwingungsverhalten einer Brennkraftmaschine und ihrer Nebenaggregate Einfluß genommen werden kann und das dazu geeignet ist, das von der Brennkraftmaschine emittierte Geräusch zu beeinflussen und zu modellieren.

Eine weitere Teilaufgabe der vorliegenden Erfindung ist es, ein Verfahren zur Beeinflussung der Schwingungen und des Schwingungsverhaltens einer Brennkraftmaschine und/oder ihrer Nebenaggregate unter Verwendung eines derartigen Zahnrades aufzuzeigen.

Gelöst wird die erste Teilaufgabe durch ein Zahnrad, insbesondere für die Verwendung in einem als Zahnriementrieb ausgebildeten Steuertrieb einer Brennkraftmaschine, dessen äußere Gestalt d.h. Geometrie durch eine Vielzahl von charakteristischen konstruktiven Zahnradparametern $z_1$ bis s $z_n$ bestimmt ist, wie beispielsweise dem Kopfkreisdurchmesser $d_k$ bzw. -radius $r_k$, dem Wälzkreisdurchmesser $d_w$ bzw. -radius $r_w$, dem Fußkreisdurchmesser $d_f$ bzw. -radius $r_f$, dem Teilkreisdurchmesser $d_t$ bzw. -radius $r_t$, der Zahnbreite b, der Teilung p, dem Modul m, der Zahndicke s, der Zahnlückenweite e, der Kopfhöhe $h_k$, der Zahnhöhe h, der Fußhöhe $h_f$ oder dergleichen, und das dadurch gekennzeichnet ist, daß mindestens ein Zahnradparameter $z_{mod}$ über den Umfang des Zahnrades variiert in der Art, daß gilt

$$z_{mod}(\varphi) = z + k_1 \cdot f(k_i, \varphi, z_j),$$

wobei z den zu $z_{mod}$ korrespondierenden Zahnradparameter einer Standardverzahnung darstellt, bei der die Zahnradparameter über den Umfang unveränderlich d.h. konstant sind, $k_1$ und $k_i$ mit $i \geq 0$ i Konstanten sind, $\varphi$ als Polarkoordinate mit $0° \leq \varphi \leq 360°$ einen Umfangspunkt des Zahnrades festlegt,

wobei der Nullpunkt des Koordinatensystems mit dem Mittelpunkt des Zahnrades zusammenfällt, $z_j$ mit $j \geq 0$ eine Schar von j Zahnradparametern darstellt und f eine analytische Funktion darstellt, wobei $f(k_i, \varphi, z_j)$ für mindestens ein $\varphi$ ungleich Null ist.

Die Verwendung des Zahnrades in einem Zahnriementrieb hat dabei nur beispielhaften Charakter. Das erfindungsgemäße Zahnrad kann des weiteren auch in einem Kegeltrieb, Stirnradtrieb, Kettentrieb oder dergleichen verwendet werden, um nur ein paar andere Anwendungsmöglichkeiten aufzuzeigen.

Im Gegensatz zu herkömmlichen, aus dem Stand der Technik bekannten Standardzahnrädern wird bei dem erfindungsgemäßen Zahnrad mindestens ein Zahnradparameter $z_{mod}$ über den Umfang des Zahnrades variiert. Dies führt dazu, daß - eine konstante Drehzahl und damit eine konstante Winkelgeschwindigkeit des Zahnrades vorausgesetzt - sich die Bedingungen im Eingriffsbereich des Zahnrades, in dem sich dieses Zahnrad mit einem anderen Antriebsmittel, beispielsweise einem Riemen, einer Kette oder einem zweiten Zahnrad, in Eingriff befindet, mit der Drehung des Zahnrades ändern. Diese Änderungen können insbesondere zwei Effekte hervorrufen.

Zum einen kann das erfindungsgemäße Zahnrad durch die sich im Eingriffsbereich ändernden Bedingungen Schwingungen in dem mit ihm in Eingriff befindlichen Antriebsmittel generieren. Zum anderen ist es möglich, Schwingungen, die von einem Antriebsmittel auf das Zahnrad übertragen werden, mittels der erfindungsgemäßen Zahnräder zu dämpfen, gegebenenfalls zu eliminieren und dadurch eine Weiterleitung der Schwingungen über das Zahnrad auf andere Bauteile zu unterbinden.

Leicht verständlich wird dies bei einem Zahnrad dessen Durchmesser d sich über den Umfang ändert, beispielsweise mit

$$d_{mod}(\varphi) = d + k_1 \cdot \sin(2 \cdot \varphi)$$

Das Ergebnis dieser Variation eines charakteristischen Zahnradparameters, nämlich des Zahnraddurchmessers, führt zu einem ovalen Zahnrad. Eine konstante Drehzahl und damit eine konstante Winkelgeschwindigkeit des Zahnrades vorausgesetzt, variiert bei einem sich derart sinusförmig über den Umfang ändernden Durchmesser bzw. Zahnradradius die Umfangsgeschwindigkeit im Eingriffsbereich. Durch die sich ständig ändernde Umfangsgeschwindigkeit im Eingriffsbereich wird das mit dem Zahnrad in Eingriff befindliche Antriebsmittel in Schwingungen versetzt. Ein Riemen beispielsweise wird in seiner Längsrichtung infolge der sich ständig ändernden Umfangsgeschwindigkeit in Longitudinalschwingungen versetzt bzw. zu Longitudinalschwingungen angeregt. Darüber hinaus können aber auch Schwingungen eines Riemens mittels des erfindungsgemäßen Zahnrades gedämpft werden.

Dadurch wird die erste der Erfindung zugrunde liegende Teilaufgabe gelöst, nämlich ein Zahnrad bereitzustellen, mit dem auf die Schwingungen und das Schwingungsverhalten einer Brennkraftmaschine und ihrer Nebenaggregate Einfluß genommen werden kann und das dazu geeignet ist, das von der Brennkraftmaschine emittierte Geräusch zu beeinflussen und zu modellieren.

Nachteilig an der oben beschriebenen Ausführungsform des erfindungsgemäßen Zahnrades, bei der der Zahnraddurchmesser variiert wird, ist, daß das mit dem Zahnrad in Eingriff befindliche Antriebsmittel nicht nur tangential zum Zahnrad d.h. bei einem Riemen oder einer Kette in Längsrichtung zu Schwingungen angeregt wird, sondern gleichzeitig eine Schwingungsanregung in radialer Richtung d.h. transversal zu dem Riemen oder der Kette erfolgt, wobei letztere in der Regel unerwünscht ist.

Weitere vorteilhafte Ausführungsformen des erfindungsgemäßen Zahnrades werden im Zusammenhang mit den Unteransprüchen erläutert.

Vorteilhaft sind - wie oben bereits ausgeführt - Ausführungsformen des Zahnrades, bei denen der Kopfkreisdurchmesser $d_k$ bzw. -radius $r_k$ des Zahnrades variiert mit $d_k$, mod $(\varphi) = d_k + k_1 \cdot f(k_i, \varphi, z_j)$ bzw. $r_{k, mod}(\varphi) = r_k + k_1 \cdot f(k_i, \varphi, z_j)$.

Vorteilhaft sind auch Ausführungsformen des Zahnrades, bei denen der Fußkreisdurchmesser $d_f$ bzw. -radius $r_f$ des Zahnrades variiert mit $d_{f, mod}(\varphi) = d_f + k_1 \cdot f(k_i, \varphi, z_j)$ bzw. $r_{f, mod}(\varphi) = r_f + k_1 \cdot f(k_i, \varphi, z_j)$.

Vorteilhaft sind auch Ausführungsformen des Zahnrades, bei denen der Wälzkreisdurchmesser $d_w$ bzw. -radius $r_w$ des Zahnrades variiert mit $d_{w, mod}(\varphi) = d_w + k_1 \cdot f(k_i, \varphi, z_j)$ bzw. $r_w$, mod $(\varphi) = r_w + k_1 \cdot f(k_i, \varphi, z_j)$.

Vorteilhaft sind auch Ausführungsformen des Zahnrades, bei denen der Grundkreisdurchmesser $d_b$ bzw. -radius $r_b$ des Zahnrades variiert mit $d_{b, mod}(\varphi) = d_b + k_1 \cdot f(k_i, \varphi, z_j)$ bzw. $r_b$, mod $(\varphi) = r_b + k_1 \cdot f(k_i, \varphi, z_j)$.

Vorteilhaft sind auch Ausführungsformen des Zahnrades, bei denen der Teilkreisdurchmesser $d_t$ bzw. -radius $r_t$ des Zahnrades variiert mit $d_{t, mod}(\varphi) = dt + k_1 f(k_i, \varphi, zj)$ bzw. $r_{t, mod}(\varphi) = r_t + k_1 \cdot f(k_i, \varphi, zj)$.

Die Variation der Durchmesser des Zahnrades wurde bereits weiter oben erläutert. Als nachteilig an der Variation des Durchmessers muß aber die Anregung zu Transversalschwingungen angesehen werden; vorausgesetzt diese Schwingungen sind nicht erwünscht.

Vorteilhaft sind auch Ausführungsformen des Zahnrades, bei denen die Zahnbreite b des Zahnrades variiert mit $b_{mod}(\varphi) = b + k_1 \cdot f(k_i, \varphi, z_j)$. Dies führt zu einem Zahnrad, dessen Stirnseiten nicht eben, sondern wellig ausgebildet sind.

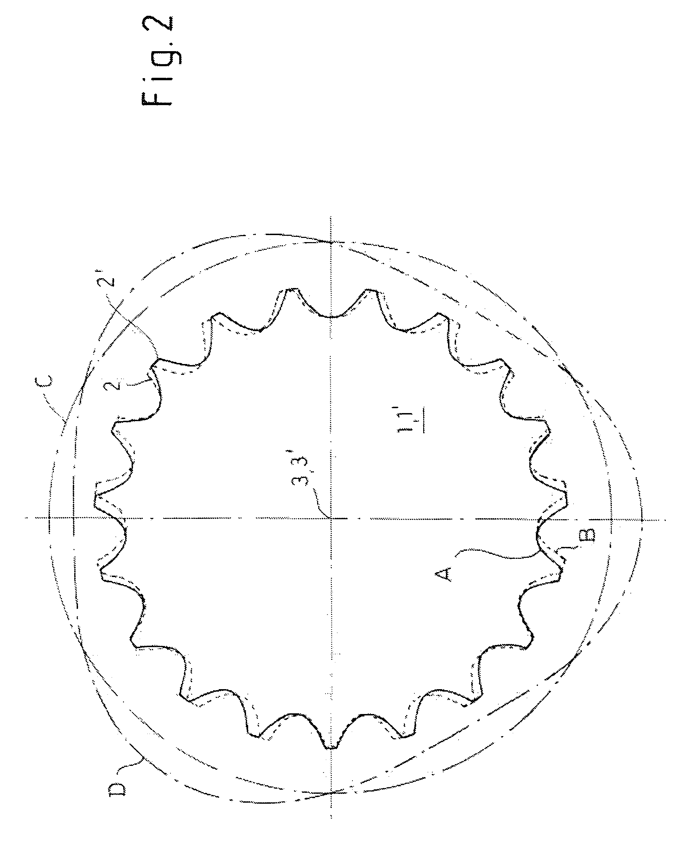

Vorteilhaft sind Ausführungsformen des Zahnrades, bei denen die Teilung p des Zahnrades variiert mit $p_{mod}(\varphi) = p + k_1 \cdot f(k_i, \varphi, z_j)$. Gleichbedeutend ist dies mit einer Ausführungsform des Zahnrades, bei der das Modul m des Zahnrades variiert mit $m_{mod}(\varphi) = m + k_1 \cdot f(k_i, \varphi, z_j)$. Eine derartige Ausgestaltung des Zahnrades wird im einzelnen noch im Zusammenhang mit der Beschreibung der Figur 2 näher erläutert. Vorteilhaft an dieser Ausführungsform ist insbesondere, daß ein derartiges Zahnrad neben der gewollten Schwingungsanregung bzw. Schwingungsdämpfung in longitudinaler bzw. tangentialer Richtung keine zusätzlichen Transversalschwingungen in radialer Richtung hervorruft.

Ein derartiges Zahnrad könnte in vorteilhafter Weise mit einer Kette, wie sie Gegenstand der europäischen Patentanmeldung EP 04100007.6 ist, zusammenarbeiten. Eine derartige Kette ist nämlich in außerordentlicher Weise dazu geeignet, mit einem Zahnrad, das über ein nicht konstantes, veränderliches Modul verfügt, zusammen zu wirken und sich dem verändernden Modul anzupassen bzw. dieses variable Modul auszugleichen.

Vorteilhaft sind aber auch Ausführungsformen des Zahnrades, bei denen die Zahndicke s des Zahnrades variiert mit $s_{mod}(\varphi) = s + k_1 - f(k_i,\varphi,z_j)$.

Vorteilhaft sind auch Ausführungsformen des Zahnrades, bei denen die Zahnlückenweite e des Zahnrades variiert mit $e_{mod}(\varphi) = e + k_1 - f(k_i,\varphi,z_j)$.

Vorteilhaft sind Ausführungsformen des Zahnrades, bei denen die Kopfhöhe $h_k$ des Zahnrades variiert mit $h_{k, mod}(\varphi) = h_k + k_1 - f(k_i,\varphi,z_j)$.

Vorteilhaft sind Ausführungsformen des Zahnrades, bei denen die Zahnhöhe h des Zahnrades variiert mit $h_{mod}(\varphi) = h + k_1 \cdot f(k_i,\varphi,z_j)$.

Vorteilhaft sind Ausführungsformen des Zahnrades, bei denen die Fußhöhe $h_f$ des Zahnrades variiert mit $h_{f, mod}(\varphi) = h_f + k_1 - f(k_i,\varphi,z_j)$.

Vorteilhaft sind Ausführungsformen des Zahnrades, bei denen das Zahnrad eine Zykloidenverzahnung aufweist. Zykloiden sind Kurven, die von einem auf dem Umfang eines Kreises angeordneten Punkt P beschrieben werden, wenn dieser Kreis auf einer Geraden oder auf bzw. in einem zweiten Kreis abrollt. Es werden drei Arten von Zykloiden unterschieden, nämlich die Orthozykloide, die Epizykloide und die Hypozykloide. Die Orthozykloide entsteht, wenn der Kreis auf einer Geraden abrollt. Rollt der Kreis auf einem zweiten Kreis ab, bildet die Bahnkurve des Punktes P eine Epizykloide. Die dritte Zykloide, die Hypozykloide, entsteht, wenn der Kreis in einem zweiten, größeren Kreis abrollt.

Bei einer Zykloidenverzahnung wird die Zahnflanke des Zahnes als Zykloide ausgebildet und zwar die Kopfflanke als Epizykloide und die Fußflanke als Hypozykloide. Orthozykloiden bilden die Flanken beispielsweise bei Zahnstangen.

Vorteilhaft ist die Zykloidenverzahnung, weil sich bei dieser Verzahnung immer ein konvex gekrümmtes Zahnkopfflankenprofil mit einem konkav gekrümmten Zahnfußflankenprofil in Eingriff befindet. Daraus resultiert eine geringe Flankenpressung und hierdurch wiederum ergibt sich eine geringe Abnutzung der Verzahnung, wodurch die Belastbarkeit der Zykloidenverzahnung grundsätzlich höher ist als bei anderen Verzahnungsarten.

Vorteilhaft sind Ausführungsformen des Zahnrades, bei denen das Zahnrad eine Evolventenverzahnung aufweist. Evolventen sind Kurven, die ein auf einer Geraden angeordneter Punkt P beschreibt, wenn diese Gerade auf einem Kreis dem sogenannten Grundkreis abrollt.

Bei einer Evolventenverzahnung wird die Zahnflanke des Zahnes als Teil einer Evolventen ausgebildet. Vorteilhaft ist die Evolventenverzahnung, weil diese Verzahnung im Vergleich zu der obenerwähnten Zykloidenverzahnung relativ kostengünstig hergestellt werden kann.

Vorteilhaft sind Ausführungsformen des Zahnrades, bei denen die analytische Funktion f eine harmonische Funktion ist.

Die zweite der Erfindung zugrunde liegende Teilaufgabe wird durch ein Verfahren der gattungsbildenden Art gelöst, das dadurch gekennzeichnet ist, daß als analytische Funktion f eine harmonische Funktion, vorzugsweise eine Sinusfunktion, verwendet wird.

Vorteilhaft sind Ausführungsformen des Verfahrens, bei denen die harmonische Funktion f in der Art formuliert wird, daß gezielt Schwingungen einer bestimmten Ordnung i beeinflußt werden. Diese Verfahrensvariante wird noch im Zusammenhang mit der Beschreibung der Figur 2 näher erläutert.

Im folgenden wird die Erfindung anhand eines Ausführungsbeispiels gemäß der Figur 2 näher beschrieben. Es zeigt:

Fig. 1    schematisch in einer perspektivischen Darstellung ein Segment eines Stirnzahnrads, und

Fig. 2    schematisch in einer Seitenansicht eine erste Ausführungsform des Zahnrades.

Figur 1 zeigt schematisch in einer perspektivischen Darstellung ein Segment eines Stirnzahnrads 1'. Diese Figur wurde ausführlich in der Beschreibungseinleitung erörtert. Sie dient der Erläuterung und Definition der einzelnen Zahnradparameter z. Zu sehen sind drei Zahnradzähne 2'. Die Durchmesser $d_f$, $d_k$, $d_t$, $d_w$ gehen durch den Mittelpunkt 3' des Zahnrades 1'.

Figur 2 zeigt schematisch in einer Seitenansicht eine erste Ausführungsform des Zahnrades 1.

Dargestellt sind vier Kurven, von denen die Kurve A, welche als durchgezogene Linie ausgeführt ist, die äußere Kontur eines Standardzahnrad 1', dessen Parameter konstant sind, nachzeichnet. Dieses Zahnrad 1' dient als Grundlage für die Ausgestaltung des erfindungsgemäßen Zahnrades 1, dessen äußere Kontur durch die gestrichelte Linie der Kurve B veranschaulicht wird.

Die Zahnradzähne 2 des erfindungsgemäßen Zahnrades 1 (Kurve B) sind dabei - abgesehen von wenigen Ausnahmen - versetzt gegenüber den Zahnradzähnen 2' des Standardzahnrades 1' (Kurve A) angeordnet. Diese Versetzung der Zahnradzähne ist übertrieben dargestellt, um sie sichtbar zu machen und den Effekt der Variation des Moduls m zu verdeutlichen. In der Praxis kann die Amplitude der Variation des Moduls beispielsweise $\Delta m = \pm 50 \mu m$ betragen. Erzielt wird dies durch eine Variation der Teilung p des Zahnrades 1 mit

$$p_{mod} = p + k_1 \cdot \sin(3 \cdot \varphi)$$

Ausgehend von der allgemeingültigen Formel:

$$p_{mod}(\varphi) = p + k_1 \cdot f(k_i, \varphi, z_j)$$

wurde demnach $k_i = 3$ mit $i = 1$ und $j = 0$ gewählt, wobei als analytische Funktion eine Sinusfunktion dient.

Dies ist gleichbedeutend mit einer Variation des Moduls m des Zahnrades mit

$$m_{mod} = m + k_1' \cdot \sin(3 \cdot \varphi)$$

und

$$\Delta m(\varphi) = k_1' \cdot \sin(3 \cdot \varphi)$$

Dabei gilt:

$$k_1 / \pi = k_1'$$

Denn es gilt:

$$m = p / \pi$$

Vorteilhaft an dieser Ausführungsform ist, daß ein derartiges Zahnrad neben der gewollten Schwingungsanregung bzw. Schwingungsdämpfung in longitudinaler bzw. tangentialer Richtung zu keiner Schwingungsanregung in transversaler d.h. radialer Richtung führt.

Als analytische Funktion f wird eine Sinusfunktion verwendet, wobei der Phasenwinkel $\varphi$ mit 3 multipliziert wird, so daß die Sinusfunktion im Vergleich zu der Sinusfunktion $\sin(\varphi)$ über einen Winkel $0° \leq \varphi \leq 360°$ nicht nur ein Maximum und ein Minimum aufweist, sondern drei Minima und drei Maxima.

Anschaulich wird dies ebenfalls in Figur 2 dargestellt. Dabei bildet die Kurve C gewissermaßen eine Nullinie in Polarkoordinaten (r = konstant, $0° \leq \varphi \leq 360°$) und die Kurve D die harmonische Funktion f in Polarkoordinaten, welche um die Nullinie C schwingt. D.h. die Abweichung $\Delta m(\varphi) = k_1' \cdot \sin(3 \cdot \varphi)$ des Moduls $m_{mod}$ des erfindungsgemäßen Zahnrades 1 von dem Modul m des Standardzahnrades 1' kann als Differenz (r - r') der Radien r, r', welche in den Mittelpunkten 3, 3' ihren Anfang nehmen, zwischen den Kurven C und D abgegriffen werden. Bei den Winkeln $\varphi$, bei denen sich die Kurven C und D schneiden, ist die Abweichung Null d.h. es liegt keine Abweichung vor und das erfindungsgemäße Zahnrad 1 entspricht dem Standardzahnrad 1'.

Drehen sich die Zahnräder 1,1' gegen den Uhrzeigersinn, dann laufen die Zähne 2 des erfindungsgemäßen Zahnrades 1 den Zähnen 2' des Standardzahnrades 1' nach, wenn die Abweichung $\Delta m < 0mm$ d.h. negativ ist. Dies ist dann gegeben, wenn die Kurve D näher an den Mittelpunkten 3,3' verläuft als die Kurve C. Die Sinusfunktion durchläuft ein Minimum. Verläuft hingegen die Kurve C näher an den Mittelpunkten 3,3' als die Kurve D ist die Abweichung $\Delta m >$

0mm d. h. positiv und die Zähne 2 des erfindungsgemäßen Zahnrades 1 laufen den Zähnen 2' des Standardzahnrades 1' voraus. Die Sinusfunktion durchläuft ein Maximum.

Das in der Figur dargestellte Zahnrad 1 ist ein Kurbelwellenrad mit insgesamt neunzehn Zähnen 2. Wird mittels dieses Kurbelwellenzahnrad 1 unter Zuhilfenahme eines Riemens eine Nockenwelle angetrieben, verursacht dieses Zahnrad 1 in dem Antriebsriemen eine harmonische Schwingung 3-ter Ordnung (i = 3). Die Ordnung i der erzwungenen Schwingung kann auf einfache Weise modifiziert werden, indem die Konstante $k_i$ der harmonischen Funktion f variiert wird. Die Amplitude kann durch Variation der Konstanten $k_1$ beeinflußt werden.

Ein derartiges Zahnrad kann aber auch auf andere Weise zur Beeinflussung der Schwingungen und des Schwingungsverhaltens einer Brennkraftmaschine und/oder ihrer Nebenaggregate verwendet werden. Wird ein derartiges Zahnrad beispielsweise auf der Nockenwelle montiert, können Schwingungen halber Ordnung (i = 0.5, 1.5, 2.5, 3.5, 4.5 ....) in Bezug auf die Kurbelwellendrehung generiert werden, denn die Kurbelwelle dreht sich mit der zweifachen Nockenwellendrehzahl. Es sind aber gerade diese Schwingungen halber Ordnung, welche für ein sportliches Geräusch sorgen und daher für die akustische Auslegung einer Brennkraftmaschine und eines Fahrzeuges im allgemeinen für die Entwickler von Interesse sind.

**Bezugszeichen**

| | |
|---|---|
| A | äußere Kontur eines Standardzahnrades |
| B | äußere Kontur eines erfindungsgemäßen Zahnrades |
| C | Nullinie in Polarkoordinaten (r = konstant, $0° \leq \varphi \leq 360°$) |
| D | harmonische Funktion f in Polarkoordinaten |

| | |
|---|---|
| 1 | Zahnrad |
| 1' | Standardzahnrad, Standardverzahnung |
| 2 | Zahnradzahn |
| 2' | Zahnradzahn |
| 3 | Zahnradmittelpunkt |
| 3' | Zahnradmittelpunkt |

| | |
|---|---|
| b | Zahnbreite |
| $d_b$ | Grundkreisdurchmesser |
| $d_f$ | Fußkreisdurchmesser |
| $d_k$ | Kopfkreisdurchmesser |
| $d_t$ | Teilkreisdurchmesser |
| $d_w$ | Wälzkreisdurchmesser |
| e | Zahnlückenweite |
| f | analytische Funktion |
| h | Zahnhöhe |
| $h_f$ | Fußhöhe |
| $h_k$ | Kopfhöhe |
| i | Ordnung |
| i, j | ganze Zahlen mit $i,j \geq 0$ |
| $k_1$ | Konstante |
| m | Modul |
| $\Delta m$ | Variation des Moduls |
| n | Drehzahl |
| $n_i$ | Schwingzahl i |
| p | Teilung |
| $r_b$ | Grundkreisradius |
| $r_f$ | Fußkreisradius |
| $r_k$ | Kopfkreisradius |
| $r_t$ | Teilkreisradius |
| $r_w$ | Wälzkreisradius |
| s | Zahndicke |
| U | Teilkreisumfang |
| x | Zähnezahl |

z        Zahnradparameter einer Standardverzahnung
$z_{mod}$    variierender Zahnradparameter
$\Delta z$    Variation des Zahnradparameters
$z_1$      Zahnradparameter
$z_j$      Schar von Zahnradparametern
$z_n$      Zahnradparameter

r, $\varphi$    Polarkoordinaten

## Patentansprüche

1. Zahnrad (1), insbesondere für die Verwendung in einem Steuertrieb einer Brennkraftmaschine, dessen äußere Gestalt d. h. Geometrie durch eine Vielzahl von charakteristischen konstruktiven Zahnradparametern $z_1$ bis $z_n$ bestimmt ist, wie beispielsweise dem Kopfkreisdurchmesser $d_k$ bzw. -radius $r_k$, dem Wälzkreisdurchmesser $d_w$ bzw. -radius $r_w$, dem Fußkreisdurchmesser $d_f$ bzw. -radius $r_f$, dem Teilkreisdurchmesser $d_t$ bzw. -radius $r_t$, dem Grundkreisdurchmesser $d_b$ bzw. -radius $r_b$, der Zahnbreite b, der Teilung p, dem Modul m, der Zahndicke s, der Zahnlückenweite e, der Kopfhöhe $h_k$, der Zahnhöhe h, der Fußhöhe $h_f$ oder dergleichen,
   **dadurch gekennzeichnet, daß**
   mindestens ein Zahnradparameter $z_{mod}$ über den Umfang des Zahnrades (1) variiert in der Art, daß gilt

$$z_{mod}(\varphi) = z + k_1 \cdot f(k_i, \varphi, z_j)$$

   wobei z den zu $Z_{mod}$ korrespondierenden Zahnradparameter einer Standardverzahnung (1') darstellt, bei der die Zahnradparameter über den Umfang unveränderlich d. h. konstant sind, $k_1$ und $k_i$ mit $i \geq 0$ i Konstanten sind, $\varphi$ als Polarkoordinate mit $0° \leq \varphi \leq 360°$ einen Umfangspunkt des Zahnrades (1) festlegt, wobei der Nullpunkt des Koordinatensystems mit dem Mittelpunkt (3) des Zahnrades (1) zusammenfällt, $z_j$ mit $j \geq 0$ eine Schar von j Zahnradparametern darstellt und f eine analytische Funktion darstellt, wobei $f(k_i, \varphi, z_j)$ für mindestens ein $\varphi$ ungleich Null ist.

2. Zahnrad (1) nach Anspruch 1,
   **dadurch gekennzeichnet, daß**
   der Kopfkreisdurchmesser $d_k$ bzw. -radius $r_k$ des Zahnrades (1) variiert mit $d_{k, mod}(\varphi) = d_k + k_1 \cdot f(k_i, \varphi, z_j)$ bzw. $r_{k, mod}(\varphi) = r_k + k_1 \cdot f(k_i, \varphi, z_j)$.

3. Zahnrad (1) nach Anspruch 1 oder 2,
   **dadurch gekennzeichnet, daß**
   der Fußkreisdurchmesser df bzw. -radius rf des Zahnrades (1) variiert mit $df, mod(\varphi) = df + k1 \cdot f(ki, \varphi, zj)$ bzw. $rf, mod(\varphi) = rf + k1 \cdot f(ki, \varphi, zj)$.

4. Zahnrad (1) nach einem der vorherigen Ansprüche,
   **dadurch gekennzeichnet, daß**
   der Wälzkreisdurchmesser dw bzw. -radius rw des Zahnrades (1) variiert mit $dw, mod(\varphi) = dw + k1 \cdot f(ki, \varphi, zj)$ bzw. $rw, mod(\varphi) = rw + k1 \cdot f(ki, \varphi, zj)$.

5. Zahnrad (1) nach einem der vorherigen Ansprüche,
   **dadurch gekennzeichnet, daß**
   der Grundkreisdurchmesser db bzw. -radius rb des Zahnrades (1) variiert mit $db, mod(\varphi) = db + k1 \cdot f(ki, \varphi, zj)$ bzw. $rb, mod(\varphi) = rb + k1 \cdot f(ki, \varphi, zj)$.

6. Zahnrad (1) nach einem der vorherigen Ansprüche,
   **dadurch gekennzeichnet, daß**
   der Teilkreisdurchmesser dt bzw. -radius rt des Zahnrades (1) variiert mit $dt, mod(\varphi) = dt + k1 \cdot f(ki, \varphi, Zj)$ bzw. $rt, mod(\varphi) = rt + k1 \cdot f(ki, \varphi, zj)$.

7. Zahnrad (1) nach einem der vorherigen Ansprüche,
   **dadurch gekennzeichnet, daß**

die Zahnbreite b des Zahnrades (1) variiert mit bmod $(\varphi)$ = b + k1 · f (ki,$\varphi$,zj).

8. Zahnrad (1) nach einem der vorherigen Ansprüche,
   **dadurch gekennzeichnet, daß**
   die Teilung p des Zahnrades (1) variiert mit pmod $(\varphi)$ = p + k1 · f (ki,$\varphi$,zj).

9. Zahnrad (1) nach einem der vorherigen Ansprüche,
   **dadurch gekennzeichnet, daß**
   das Modul m des Zahnrades (1) variiert mit mmod $(\varphi)$ = m + k1 · f (ki,$\varphi$,zj).

10. Zahnrad (1) nach einem der vorherigen Ansprüche,
    **dadurch gekennzeichnet, daß**
    die Zahndicke s des Zahnrades (1) variiert mit smod $(\varphi)$ = s + k1 · f (ki,$\varphi$,zj).

11. Zahnrad (1) nach einem der vorherigen Ansprüche,
    **dadurch gekennzeichnet, daß**
    die Zahnlückenweite e des Zahnrades (1) variiert mit emod $(\varphi)$ = e + k1 · f (ki,$\varphi$,zj).

12. Zahnrad (1) nach einem der vorherigen Ansprüche,
    **dadurch gekennzeichnet, daß**
    die Kopfhöhe hk des Zahnrades (1) variiert mit hk, mod $(\varphi)$ = hk + k1 · f (ki,$\varphi$,zj).

13. Zahnrad (1) nach einem der vorherigen Ansprüche,
    **dadurch gekennzeichnet, daß**
    die Zahnhöhe h des Zahnrades (1) variiert mit hmod $(\varphi)$ = h + k1 · f (ki,$\varphi$,zj).

14. Zahnrad (1) nach einem der vorherigen Ansprüche,
    **dadurch gekennzeichnet, daß**
    die Fußhöhe hf des Zahnrades (1) variiert mit hf, mod $(\varphi)$ = hf + k1 · f (ki,$\varphi$,zj).

15. Zahnrad (1) nach einem der vorherigen Ansprüche,
    **dadurch gekennzeichnet, daß**
    das Zahnrad (1) eine Zykloidenverzahnung aufweist.

16. Zahnrad (1) nach einem der vorherigen Ansprüche 1 bis 14,
    **dadurch gekennzeichnet, daß**
    das Zahnrad (1) eine Evolventenverzahnung aufweist.

17. Zahnrad (1) nach einem der vorherigen Ansprüche,
    **dadurch gekennzeichnet, daß**
    die analytische Funktion f eine harmonische Funktion ist.

18. Verfahren zur Beeinflussung der Schwingungen und des Schwingungsverhaltens einer Brennkraftmaschine und/ oder ihrer Nebenaggregate unter Verwendung eines Zahnrades (1) gemäß den Ansprüchen 1 bis 17,
    **dadurch gekennzeichnet, daß**
    als analytische Funktion eine harmonische Funktion verwendet wird.

19. Verfahren nach Anspruch 18,
    **dadurch gekennzeichnet, daß**
    als harmonische Funktion eine Sinusfunktion verwendet wird.

20. Verfahren nach Anspruch 18 oder 19,
    **dadurch gekennzeichnet, daß**
    die harmonische Funktion in der Art formuliert wird, daß gezielt Schwingungen einer bestimmten Ordnung i beeinflußt werden.

**EP 1 600 667 B1**

**Claims**

1. Gearwheel (1), in particular for use in a control drive of an internal combustion engine, whose outer design, that is to say geometry, is defined by a plurality of characteristic design gearwheel parameters $z_1$ to $z_n$, such as for example the tip diameter $d_k$ or radius $r_k$, the pitch circle diameter $d_w$ or radius $r_w$, the root circle diameter $d_f$ or radius $r_f$, the reference diameter $d_t$ or radius $r_t$, the base diameter $d_b$ or radius $r_b$, the facewidth b, the pitch p, the module m, the tooth thickness s, the spacewidth e, the addendum $h_k$, the tooth depth h, the dedendum $h_f$ or the like,
   **characterized in that**
   at least one gearwheel parameter $Z_{mod}$ varies over the periphery of the gearwheel (1) such that

$$z_{mod}(\varphi) \;=\; z \;+\; k_1 \;\cdot\; f(k_i, \varphi, z_j)$$

   is true, with z representing that gearwheel parameter of a standard toothing (1') which corresponds to $Z_{mod}$, in which standard toothing (1') the gearwheel parameters are invariant, that is to say constant, over the periphery, $k_1$ and $k_i$ are i constants where $i \geq 0$, and $\varphi$ as a polar coordinate defines a peripheral point of the gearwheel (1) where $0° \leq \varphi \leq 360°$, with the zero point of the coordinate system coinciding with the central point (3) of the gearwheel (1), $z_j$ representing a family of j gearwheel parameters where $j \geq 0$, and f representing an analytical function, with $f(k_i, \varphi, z_j)$ being unequal to zero for at least one value of $\varphi$.

2. Gearwheel (1) according to Claim 1,
   **characterized in that**
   the tip diameter $d_k$ or radius $r_k$ of the gearwheel (1) varies with $d_{k, mod}(\varphi) = d_k + k_1 \cdot f(k_i, \varphi, z_j)$ or $r_{k, mod}(\varphi) = r_k + k_1 \cdot f(k_i, \varphi, z_j)$ respectively.

3. Gearwheel (1) according to Claim 1 or 2,
   **characterized in that**
   the root circle diameter $d_f$ or radius $r_f$ of the gearwheel (1) varies with $d_{f, mod}(\varphi) = d_f + k_1 \cdot f(k_i, \varphi, z_j)$ or $r_{f, mod}(\varphi) = r_f + k_1 \cdot f(k_i, \varphi, z_j)$ respectively.

4. Gearwheel (1) according to one of the preceding claims,
   **characterized in that**
   the pitch circle diameter $d_w$ or radius $r_w$ of the gearwheel (1) varies with $d_{w, mod}(\varphi) = d_w + k_1 \cdot f(k_i, \varphi, z_j)$ or $r_{w, mod}(\varphi) = r_w + k_1 \cdot f(k_i, \varphi, z_j)$ respectively.

5. Gearwheel (1) according to one of the preceding claims,
   **characterized in that**
   the base diameter $d_b$ or radius $r_b$ of the gearwheel (1) varies with $d_{b, mod}(\varphi) = d_b + k_1 \cdot f(k_i, \varphi, z_j)$ or $r_{b, mod}(\varphi) = r_b + k_1 \cdot f(k_i, \varphi, z_j)$ respectively.

6. Gearwheel (1) according to one of the preceding claims,
   **characterized in that**
   the reference diameter $d_t$ or radius $r_t$ of the gearwheel (1) varies with $d_{t, mod}(\varphi) = dt + k_1 \cdot f(k_i, \varphi, z_j)$ or $r_{t, mod}(\varphi) = r_t + k_1 \cdot f(k_i, \varphi, z_j)$ respectively.

7. Gearwheel (1) according to one of the preceding claims,
   **characterized in that**
   the facewidth b of the gearwheel (1) varies with $b_{mod}(\varphi) = b + k_1 \cdot f(k_i, \varphi, z_j)$.

8. Gearwheel (1) according to one of the preceding claims,
   **characterized in that**
   the pitch p of the gearwheel (1) varies with $p_{mod}(\varphi) = p + k_1 \cdot f(k_i, \varphi, z_j)$.

9. Gearwheel (1) according to one of the preceding claims,
   **characterized in that**
   the module m of the gearwheel (1) varies with $m_{mod}(\varphi) = m + k_1 \cdot f(k_i, \varphi, z_j)$.

**10.** Gearwheel (1) according to one of the preceding claims,
**characterized in that**
the tooth thickness s of the gearwheel (1) varies with $s_{mod}(\varphi) = s + k_1 \cdot f(k_i, (\varphi, z_j))$.

**11.** Gearwheel (1) according to one of the preceding claims,
**characterized in that**
the spacewidth e of the gearwheel (1) varies with $e_{mod}(\varphi) = e + k_1 \cdot f(k_i, \varphi, z_j)$.

**12.** Gearwheel (1) according to one of the preceding claims,
**characterized in that**
the addendum $h_k$ of the gearwheel (1) varies with $h_{k, mod}(\varphi) = h_k + k_1 \cdot f(k_i, \varphi, z_j)$.

**13.** Gearwheel (1) according to one of the preceding claims,
**characterized in that**
the tooth depth h of the gearwheel (1) varies with $h_{mod}(\varphi) = h + k_1 \cdot f(k_i, \varphi, z_j)$.

**14.** Gearwheel (1) according to one of the preceding claims,
**characterized in that**
the dedendum $h_f$ of the gearwheel (1) varies with $h_{f,mod}(\varphi) = h_f + k_1 \cdot f(k_i, \varphi, z_j)$.

**15.** Gearwheel (1) according to one of the preceding claims,
**characterized in that**
the gearwheel (1) has a cycloidal toothing.

**16.** Gearwheel (1) according to one of the preceding Claims 1 to 14,
**characterized in that**
the gearwheel (1) has an involute toothing.

**17.** Gearwheel (1) according to one of the preceding claims,
**characterized in that**
the analytical function f is a harmonic function.

**18.** Method for influencing the vibrations and the vibration behaviour of an internal combustion engine and/or of its auxiliary units using a gearwheel (1) according to Claims 1 to 17,
**characterized in that**
a harmonic function is used as an analytical function.

**19.** Method according to Claim 18,
**characterized in that**
a sinusoidal function is used as a harmonic function.

**20.** Method according to Claim 18 or 19,
**characterized in that**
the harmonic function is formulated such that vibrations of a certain order i are influenced in a targeted manner.

**Revendications**

**1.** Roue dentée (1), notamment pour être utilisée dans un engrenage de commande d'un moteur à combustion interne dont la configuration extérieure, c'est-à-dire la forme géométrique est déterminée par une pluralité de paramètres constructifs caractéristiques d'une roue dentée $z_1$ à $z_n$ comme, par exemple, le diamètre $d_k$ ou le rayon $r_k$ du cercle extérieur d'échanfreinement, le diamètre $d_w$ ou le rayon $r_w$ du cercle de roulement, le diamètre $d_f$ ou le rayon $r_f$ du cercle de pied de denture, le diamètre $d_t$ ou le rayon $r_t$ du cercle primitif de référence, le diamètre $d_b$ ou le rayon $r_b$ du cercle de base, la largeur des dents b, le pas p, le module m, l'épaisseur des dents s, la largeur d'entredent e, la saillie des dents $h_k$, la hauteur des dents h, le creux de référence $h_f$ ou similaire, **caractérisée en ce qu'**au moins un paramètre de roue dentée $z_{mod}$ varie sur le pourtour de la roue dentée (1) de telle sorte que l'équation suivante est vraie :

$$z_{mod}(\varphi) = z + k_1 * f(k_i, \varphi, z_j)$$

où z désigne le paramètre de roue dentée correspondant à $Z_{mod}$ d'une denture standard (1') avec laquelle les paramètres de roue dentée sont invariables, c'est-à-dire constants sur le pourtour, $k_1$ et $k_i$ avec $i \geq 0$ i étant des constantes, $\varphi$ déterminant un point du pourtour de la roue dentée (1) en tant que coordonnée polaire avec $0° \leq \varphi \leq 360°$, le point zéro du système de coordonnées coïncidant avec le point central (3) de la roue dentée (1), $z_j$ avec $j \geq 0$ représentant un système de j paramètres de roue dentée et f désignant une fonction analytique, $f(k_i, \varphi, z_j)$ étant différente de zéro pour au moins une $\varphi$.

2. Roue dentée (1) selon la revendication 1, **caractérisée en ce que** le diamètre $d_k$ ou le rayon $r_k$ du cercle extérieur d'échanfreinement de la roue dentée (1) varie avec $d_{k, mod}(\varphi) = d_k + k_1 * f(k_i, \varphi, z_j)$ ou $r_{k, mod}(\varphi) = r_k + k_1 * f(k_i, (\varphi, z_j)$.

3. Roue dentée (1) selon la revendication 1 ou 2, **caractérisée en ce que** le diamètre $d_f$ ou le rayon $r_f$ du cercle de pied de denture de la roue dentée (1) varie avec $d_{f, mod}(\varphi) = d_f + k_1 * f(k_i, \varphi, z_j)$ ou $r_{f, mod}(\varphi) = r_f + k_1 * f(k_i, \varphi, z_j)$.

4. Roue dentée (1) selon l'une des revendications précédentes, **caractérisée en ce que** le diamètre $d_w$ ou le rayon $r_w$ du cercle de roulement de la roue dentée (1) varie avec $d_{w, mod}(\varphi) = d_w + k_1 * f(k_i, \varphi, z_j)$ ou $r_{w, mod}(\varphi) = r_w + k_1 * f(k_i, \varphi, z_j)$.

5. Roue dentée (1) selon l'une des revendications précédentes, **caractérisée en ce que** le diamètre $d_b$ ou le rayon $r_b$ du cercle de base de la roue dentée (1) varie avec $d_{b, mod}(\varphi) = d_b + k_1 * f(k_i, \varphi, z_j)$ ou $r_{b, mod}(\varphi) = r_b + k_1 * f(k_i, \varphi, z_j)$.

6. Roue dentée (1) selon l'une des revendications précédentes, **caractérisée en ce que** le diamètre $d_t$ ou le rayon $r_t$ du cercle primitif de référence de la roue dentée (1) varie avec $d_{t, mod}(\varphi) = d_t + k_1 * f(k_i, \varphi, z_j)$ ou $r_{t, mod}(\varphi) = r_t + k_1 * f(k_i, \varphi, z_j)$.

7. Roue dentée (1) selon l'une des revendications précédentes, **caractérisée en ce que** la largeur des dents b de la roue dentée (1) varie avec $b_{mod}(\varphi) = b + k_1 * f(k_i, \varphi, z_j)$.

8. Roue dentée (1) selon l'une des revendications précédentes, **caractérisée en ce que** le pas p de la roue dentée (1) varie avec $p_{mod}(\varphi) = p + k_1 * f(k_i, \varphi, z_j)$.

9. Roue dentée (1) selon l'une des revendications précédentes, **caractérisée en ce que** le module m de la roue dentée (1) varie avec $m_{mod}(\varphi) = m + k_1 * f(k_i, \varphi, z_j)$.

10. Roue dentée (1) selon l'une des revendications précédentes, **caractérisée en ce que** l'épaisseur des dents s de la roue dentée (1) varie avec $s_{mod}(\varphi) = s + k_1 * f(k_i, \varphi, z_j)$.

11. Roue dentée (1) selon l'une des revendications précédentes, **caractérisée en ce que** la largeur d'entredent e de la roue dentée (1) varie avec $e_{mod}(\varphi) = e + k_1 * f(k_i, \varphi, z_j)$.

12. Roue dentée (1) selon l'une des revendications précédentes, **caractérisée en ce que** la saillie des dents $h_k$ de la roue dentée (1) varie avec $h_{k, mod}(\varphi) = h_k + k_1 * f(k_i, \varphi, z_j)$.

13. Roue dentée (1) selon l'une des revendications précédentes, **caractérisée en ce que** la hauteur des dents h de la roue dentée (1) varie avec $h_{mod}(\varphi) = h + k_1 * f(k_i, \varphi, z_j)$.

14. Roue dentée (1) selon l'une des revendications précédentes, **caractérisée en ce que** le creux de référence $h_f$ de la roue dentée (1) varie avec $h_{f, mod}(\varphi) = h_f + k_1 * f(k_i, \varphi, z_j)$.

15. Roue dentée (1) selon l'une des revendications précédentes, **caractérisée en ce que** la roue dentée (1) présente une denture cycloïdale.

16. Roue dentée (1) selon l'une des revendications précédentes 1 à 14, **caractérisée en ce que** la roue dentée (1) présente une denture à développante.

**17.** Roue dentée (1) selon l'une des revendications précédentes, **caractérisée en ce que** la fonction analytique f est une fonction harmonique.

**18.** Procédé pour influencer les oscillations et le comportement oscillant d'un moteur à combustion interne et/ou de ses groupes auxiliaires en utilisant une roue dentée (1) selon l'une des revendications 1 à 17, **caractérisé en ce qu'**une fonction harmonique est utilisée comme fonction analytique.

**19.** Procédé selon la revendication 18, **caractérisé en ce qu'**une fonction sinusoïdale est utilisée comme fonction harmonique.

**20.** Procédé selon la revendication 18 ou 19, **caractérisé en ce que** la fonction harmonique est formulée de telle sorte que des oscillations ciblées d'un ordre i donné sont influencées.

Fig.1

EP 1 600 667 B1

Fig. 2

EP 1 600 667 B1